# EUROPEAN PATENT APPLICATION

(11) **EP 4 354 629 A1**
(43) Date of publication of application: **17.04.2024**
(21) Application number: 22831957.0
(22) Date of filing: 27.06.2022
(51) Int. Cl.: H01M 50/451, H01M 50/457

(54) **SEPARATOR AND PREPARATION METHOD THEREFOR, SECONDARY BATTERY, AND ELECTRICAL DEVICE**

(30) Priority: 30.06.2021 CN 202110730735
(71) Applicant: Huawei Technologies Co., Ltd., Shenzhen, Guangdong 518129 (CN)
(72) Inventor: ZHANG, Xinzhi, Shenzhen, Guangdong 518129 (CN); DENG, Yaoming, Shenzhen, Guangdong 518129 (CN)
(74) Representative: Gill Jennings & Every LLP
(86) International application number: PCT/CN2022/101495
(87) International publication number: WO 2023/274143

(57) **Abstract**

This application provides a separator and a preparation method thereof, a secondary battery, and a power-consuming device. The separator includes a base film, at least one inorganic coating, and at least one organic coating. The base film, the inorganic coating, and the organic coating are laminated. A surface on at least one side of the base film is in contact with the inorganic coating. A volume content of an organic heat-resistant resin in the organic coating is 60% to 99%. A volume fraction of inorganic particles contained in the organic coating is 1% to 40%. A lower one of a melting point or decomposition temperature of the organic heat-resistant resin is greater than or equal to 200°C. The separator with the structure can improve high temperature shrinkage performance of the separator while increasing a film rupture temperature of the separator.

## Description

### CROSS-REFERENCE TO RELATED APPLICATIONS

This application claims priority to Chinese Patent Application No. 202110730735.X, filed with the China National Intellectual Property Administration on June 30, 2021 and entitled "SEPARATOR AND PREPARATION METHOD THEREOF, SECONDARY BATTERY, AND POWER-CONSUMING DEVICE", which is incorporated herein by reference in its entirety.

### TECHNICAL FIELD

This application relates to the field of batteries, and specifically to a separator and a preparation method thereof, a secondary battery, and a power-consuming device.

### BACKGROUND

Currently, secondary batteries have been widely used in consumer terminal devices such as mobile phones, notebook computers, wearable devices, mobile power supplies, and electric vehicles and the field of energy storage. However, failure accidents of secondary batteries frequently occur, and safety performance of the secondary batteries has become a focus of research. Failures of secondary batteries are mainly smoke, fire, burning, and explosion caused by thermal runaway. The main causes of thermal runaway include mechanical collision, overcharging/overdischarging, high temperature and overheating, and the like, which causes a short circuit inside a secondary battery. When the short circuit occurs inside the secondary battery, a separator shrinks or is damaged at a high temperature, which causes a larger short-circuit area and further causes the secondary battery to burn and fail. Therefore, heat resistance of the separator is crucial for safety performance of the secondary battery. A possibility of a short circuit inside the secondary battery can be reduced by improving the heat resistance of the separator, to improve a short-circuit resistance capability of the secondary battery, and improve safety of the secondary battery. The heat resistance of the separator is indicated in integrity (no shrinkage at a high temperature) and high temperature strength (no damage at a high temperature, generally represented by a film rupture temperature, where the film rupture temperature is a temperature at which a structure of the separator ruptures at high temperature). However, an existing separator is coated with a heat-resistant coating, which can improve the high temperature strength of the separator. However, shrinkage performance of the separator is poor, and a shrinkage rate is usually greater than 5%. Although the shrinkage performance of the separator can be improved by coating an organic-inorganic composite coating, the film rupture temperature of the separator is generally lower than 220°C, and safety performance of the separator cannot be further improved. Therefore, the existing separator cannot meet requirements of both low shrinkage and a high film rupture temperature at a high temperature.

### SUMMARY

This application provides a separator and a preparation method thereof, a secondary battery, and a power-consuming device, to improve high-temperature shrinkage performance of a separator while increasing a film rupture temperature of the separator.

According to a first aspect, this application provides a separator. The separator includes a base film, at least one inorganic coating, and at least one organic coating. The base film, the inorganic coating, and the organic coating are laminated. A surface on at least one side of the base film is in contact with the inorganic coating. A volume content of an organic heat-resistant resin in the organic coating is 60% to 99%. A volume fraction of inorganic particles contained in the organic coating is 1% to 40%. A lower one of a melting point or decomposition temperature of the organic heat-resistant resin is greater than or equal to 200°C.

In the separator provided in this application, both the inorganic coating and the organic coating are disposed, and at least one inorganic coating is in direct contact with the base film. In the separator with the structure, the inorganic coating has good thermal stability and dimensional stability, which can improve high-temperature dimensional stability of both the base film and the organic coating, and reduce a shrinkage rate of the separator at a high temperature. The organic coating contains an organic heat-resistant resin with a melting point or decomposition temperature greater than or equal to 200°C. The high melting point of the organic heat-resistant resin can maintain specific strength of the separator at a high temperature without rupture, and improve a film rupture temperature of the separator. The inorganic coating and the organic coating are used together to ensure that the separator has both a low shrinkage rate and a high film rupture temperature at a high temperature, to achieve excellent heat resistance. A volume content of the organic heat-resistant resin in each organic coating is 60% to 99%, and the organic heat-resistant resin may form a continuous mesh structure in the organic coating, to ensure that the organic coating has sufficient high temperature strength. In addition, the organic coating further includes inorganic particles, to improve processing performance of the organic coating and prevent problems such as wrinkles and edge collapse of the organic coating. In addition, a volume fraction of the inorganic particles is 1% to 40%, to avoid a low content of the organic heat-resistant resin caused by an excessively high amount of inorganic particles, and avoid adverse impact on high temperature strength of the organic coating.

In a possible implementation of this application, the base film may be a polyolefin porous film. In a possible implementation of this application, the base film includes a first polyolefin resin, the first polyolefin resin is ultra-high molecular weight polyethylene with a weight average molecular weight greater than or equal to 600,000, and a mass content of the first polyolefin resin in the base film is greater than 50%.

In a possible implementation of this application, the base film further includes a second polyolefin resin and/or a third polyolefin resin, a melting point of the second polyolefin resin is less than a melting point of the first polyolefin resin, and a melting point of the third polyolefin resin is greater than the melting point of the first polyolefin resin.

By way of example, the first polyolefin resin may be a polyolefin resin with a melting point greater than 130°C, the second polyolefin resin may be a polyolefin resin with a melting point less than 130°C, and the third polyolefin resin may be a polyolefin resin with a melting point greater than 150°C.

The third polyolefin resin may be selected from at least one of polypropylene, poly-1-butylene, poly-1-pentene, poly-1-hexene, poly-4-methyl-1-pentene, poly-1-octene, polyvinyl acetate, polymethyl methacrylate, polystyrene, polydifluoroethylene, or polytetrafluoroethylene. Preferably, the second polyolefin may be polypropylene, poly-4-methyl-1-pentene, or a mixture of polypropylene and poly-4-methyl-1-pentene.

In a possible implementation of this application, the base film contains the third polyolefin resin, and a mass content of the third polyolefin resin in the base film is 5% to 30%.

A pore closing temperature and a shrinkage rate of the base film can be adjusted by adjusting the composition of components in the base film.

In a possible implementation of this application, a weight per unit thickness of the base film is greater than or equal to 0.62 g/m²/µm, a porosity is less than 35%, and an average pore size is less than 45 nm. In a possible implementation of this application, the weight per unit thickness of the base film is greater than or equal to 0.64 g/m²/µm, the porosity is greater than 25% and less than 35%, and the average pore size is less than 43 nm.

In a possible implementation of this application, an elongation of the base film is greater than or equal to 130%, preferably greater than or equal to 150%, and further preferably greater than or equal to 180%. The elongation of the base film includes a transverse direction elongation and a machine direction elongation. In this embodiment of this application, both the transverse direction elongation and the machine direction elongation of the base film are greater than or equal to 130%.

In a possible implementation of this application, a pore closing temperature of the base film is less than or equal to 145°C, preferably less than or equal to 140°C, and further preferably less than or equal to 135°C.

In a possible implementation of this application, a film rupture temperature of the base film is greater than or equal to 155°C, preferably greater than or equal to 160°C, and further preferably greater than or equal to 180°C.

In a possible implementation of this application, a thickness of the base film is 1 µm to 16 µm, preferably 1 µm to 9 µm, and further preferably 1 µm to 7 µm.

Pore closing effect of the base film can be effectively improved and the secondary battery using the separator can maintain a good fast charging capability and a high energy density by limiting the weight per unit thickness, porosity, average pore size, and thickness of the base film.

In a possible implementation of this application, each inorganic coating contains inorganic particles, and a volume content of the inorganic particles in the inorganic coating is greater than 80%. In an exemplary implementation of this application, in each inorganic coating, the volume content of inorganic particles is 85% to 99%, to improve thermal stability of the base film.

In an exemplary implementation of this application, a particle size D50 of the inorganic particles is less than or equal to 2 µm, and preferably less than or equal to 500 nm. The pore closing effect of base film can be effectively improved by controlling the particle size of the inorganic particles.

In an exemplary implementation of this application, a thickness of each inorganic coating is less than or equal to 4 µm. In a possible implementation of this application, the thickness of each inorganic coating is less than half of the thickness of the base film, to improve pore closing performance of the separator while improving dimensional stability of the separator.

In a possible implementation of this application, in the organic coating, the organic heat-resistant resin may be selected from at least one of aromatic polyamide, polyimide, polyamide-imide, polyetherimide, polysulfone, polyketone, polyether ketone, or polytetrafluoroethylene. The aromatic polyamide may be selected from poly-p-phenylene terephthamide and/or poly(m-phenylene isophthalamide).

In an exemplary implementation of this application, a thickness of each organic coating is 0.5 µm to 5 µm, and preferably 1 µm to 4 µm. The separator can be kept from affecting the energy density of the secondary battery while the heat resistance of the separator is improved by optimizing the thickness of the organic coating.

In an exemplary implementation of this application, the at least one inorganic coating and the at least one organic coating are respectively disposed on surfaces on the two sides of the base film, and the surfaces on the two sides of the base film are both in contact with the inorganic coating. By way of example, the separator in an implementation of this application includes an organic coating, an inorganic coating, a base film, an inorganic coating, and an organic coating that are sequentially disposed.

In an exemplary implementation of this application, an adhesive layer is provided on at least one outermost surface of the separator. The adhesive layer is disposed and may be used to connect to an electrode plate of the secondary battery during assembly of the secondary battery, to improve an integration degree of the secondary battery, and improve hardness of the secondary battery, so that mechanical safety performance of the secondary battery is improved.

In a possible implementation of this application, a pore closing temperature of the separator is less than or equal to 140°C, preferably less than or equal to 138°C, and further preferably less than or equal to 137°C; and a film rupture temperature is greater than or equal to 220°C, preferably greater than or equal to 230°C, and further preferably greater than or equal to 260°C.

In a possible implementation of this application, an elongation is greater than or equal to 130%, preferably greater than or equal to 150%, and further preferably greater than or equal to 180%; and a shrinkage rate at 150°C for 0.5 h is less than or equal to 5%, preferably less than or equal to 3%, and further preferably less than or equal to 2.5%. The elongation rate of the separator includes a transverse direction elongation rate and a machine direction elongation rate. In this embodiment of this application, both the transverse direction elongation rate and the machine direction elongation rate of the separator may reach a range greater than or equal to 150%.

According to a second aspect, this application further provides a preparation method of a separator, where the preparation method includes:
forming an inorganic coating on a surface on at least one side of a base film; and
forming an organic coating on a surface on the other side of the base film and/or a surface of at least one inorganic coating.

The separator obtained by using the preparation method has the same performance as the separator in the first aspect of this application, and details are not described herein again.

In a possible implementation of this application, the forming an inorganic coating on a surface on at least one side of a base film includes: forming an inorganic slurry containing inorganic particles, coating the inorganic slurry on the surface on the at least one side of the base film, and forming the inorganic coating after drying.

In a possible implementation of this application, the forming an organic coating on a surface on the other side of the base film and/or a surface of at least one inorganic coating includes: forming an organic slurry containing an organic heat-resistant resin, coating the organic slurry on the surface on the other side of the base film and/or the surface of the at least one inorganic coating, and forming the organic coating after drying.

In a possible implementation of this application, the preparation method further includes: melting and mixing raw materials of the base film, and forming a gel-like sheet after extrusion molding, where the gel-like sheet sequentially undergoes primary stretching, extraction, secondary stretching, and heat setting, to form the base film. Parameters such as an air permeability value, a thermal shrinkage rate, a porosity, and mechanical strength of the base film can be adjusted through the primary stretching, extraction, secondary stretching, and heat setting, to obtain the base film whose properties meet requirements.

In a possible implementation of this application, the primary stretching includes transverse direction stretching and machine direction stretching, and stretching ratios of the transverse direction stretching and the machine direction stretching are 3 to 6, to help control an appropriate crystallinity, so that the base film obtains a good elongation and good mechanical strength.

In a possible implementation of this application, the secondary stretching includes transverse direction stretching and machine direction stretching, and stretching ratios of the transverse direction stretching and the machine direction stretching are 1 to 2.

According to a third aspect, this application further provides a secondary battery. The secondary battery includes a positive electrode plate, a negative electrode plate, an electrolyte, and the separator in the first aspect of this application or the separator obtained by using the preparation method in the second aspect. The separator is located between the positive electrode plate and the negative electrode plate. The electrolyte is filled between the positive electrode plate and the negative electrode plate and infiltrates the separator.

The secondary battery in this application includes the separator in the possible implementations of the first aspect of this application. Because the separator in the first aspect of this application has a high film rupture temperature and a low shrinkage rate, the secondary battery provided in this application may have good safety.

The secondary battery in this application may be, for example, a lithium-ion battery, a sodium-ion battery, a potassium-ion battery, a calcium-ion battery, or a magnesium-ion battery.

According to a fourth aspect, this application provides a power-consuming device. The power-consuming device includes the secondary battery in the third aspect of this application.

The power-consuming device in this application includes the secondary battery in the third aspect of this application. On the basis that the secondary battery in this application has high safety, the power-consuming device in this application also has high safety.

The power-consuming device in this application may include, for example, a mobile phone, a computer, a wearable device, a mobile power supply, an electric vehicle, and an energy storage apparatus.

### BRIEF DESCRIPTION OF DRAWINGS

FIG. 1 is a schematic diagram of a charging and discharging principle of a secondary battery according to an embodiment of this application;
FIG. 2 is a schematic diagram of a structure of a separator according to an embodiment of this application;
FIG. 3 is a schematic diagram of a structure of a separator according to another embodiment of this application;
FIG. 4 is a schematic flowchart of preparing a base film according to an embodiment of this application; and
FIG. 5 is a schematic diagram of a structure of a separator according to another embodiment of this application.

Reference numerals:
11: Positive electrode plate. 12: Negative electrode plate. 13: Separator. 131: Base film.
132: Inorganic coating. 133: Organic coating. 134: Adhesive layer.

### DESCRIPTION OF EMBODIMENTS

To make the objectives, technical solutions, and advantages of this application clearer, the following further describes this application in detail with reference to the accompanying drawings.

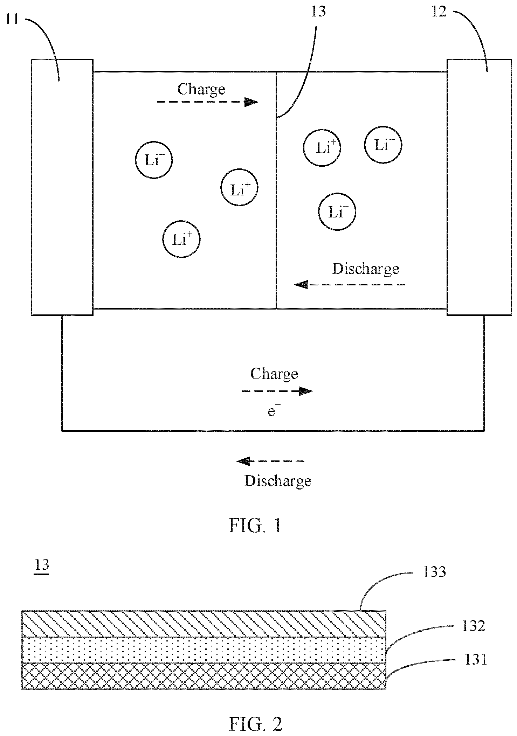

Currently, secondary batteries that can implement cyclic charging and discharging, for example, lithium-ion batteries, have been widely used in terminal devices such as mobile phones, notebook computers, portable electronic mobile devices, unmanned aerial vehicles, and electric vehicles. FIG. 1 is a schematic diagram of a working principle of a charging and discharging process of a lithium-ion battery. As shown in FIG. 1, during charging, lithium ions are detached from a lattice of a positive electrode material, and are inserted into a negative electrode material after passing through an electrolyte and a separator 13, and electrons flow from a positive electrode plate 11 to a negative electrode plate 12. During discharging, lithium ions are detached from the negative electrode material, and are inserted into the lattice of the positive electrode material after passing through the electrolyte and the separator 13, and electrons flow from the negative electrode plate 12 to the positive electrode plate 11 to supply power to an external terminal device. The electrolyte is a medium for transferring lithium ions between the positive and negative electrodes, and the separator 13 is a non-conductive film layer, which allows passage of the lithium ions and prevents passage of electrons, to separate the positive electrode from the negative electrode to prevent a short circuit. When the separator 13 shrinks or ruptures at a high temperature and a short circuit occurs between the positive and negative electrodes, internal heat of the secondary battery increases sharply, which easily causes burning or explosion of the secondary battery. The main causes of burning or explosion of the secondary battery are mechanical abuse, electrical abuse, and thermal abuse. As a result, the separator 13 ruptures and a short circuit occurs between the positive and negative electrodes of the secondary battery. Short-circuit heat generated by the internal short circuit further causes shrinkage or rupture of the separator 13 at a high temperature, causing a larger short-circuit area and further causing burning or explosion of the secondary battery. Therefore, heat resistance of the separator 13 is crucial for safety performance of the lithium-ion battery. The thermal abuse is a thermal (or high-temperature) abuse test of the secondary battery, for example, a hot box test (a cell is baked at a high temperature greater than or equal to 130°C). The mechanical abuse is an abuse test of the secondary battery in terms of an external mechanical force, for example, a foreign object extrusion test, a nail penetration test, and an impact test.

The heat resistance of the separator is mainly indicated in integrity (no shrinkage at a high temperature) and high temperature strength (no damage at a high temperature). The inventor of this application finds in research that for an existing separator coated with an organic heat-resistant coating, although high temperature strength of the separator can be improved, shrinkage performance of the separator is poor, and a shrinkage rate at 150 degrees is usually greater than 5%. When a separator is coated with an organic-inorganic composite coating, because a polyolefin resin in a base film is melted at a high temperature, for example, at a temperature higher than a melting point of the base film, mechanical strength is lost, inorganic particles are skeleton structures and have no good mechanical strength, and high temperature strength is provided only by an organic heat-resistant layer. As a result, the inorganic particles damage mechanical strength of a porous network structure in an organic coating, and the damage is more serious at a high temperature. Therefore, in the existing separator improvement method, although the shrinkage performance of the separator can be improved, a film rupture temperature of the obtained separator is generally lower than 220°C, and safety performance of the separator cannot be further improved. Therefore, a current separator cannot meet requirements of both low shrinkage and a high film rupture temperature at a high temperature.

To resolve the technical problem, an embodiment of this application provides a separator. Terms used in the following embodiments are merely for the purpose of describing specific embodiments, but are not intended to limit this application. As used in the specification and appended claims of this application, singular expressions "one", "a", "the foregoing", "the", and "the one" are intended to further include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of the embodiments", unless otherwise specifically emphasized. Terms "include", "have", and their variants all mean "include but are not limited to", unless otherwise specifically emphasized in another manner.

FIG. 2 is a schematic diagram of a structure of a separator according to an embodiment of this application. As shown in FIG. 2, in an embodiment of this application, the separator 13 includes a base film 131 (which may be denoted as A), at least one inorganic coating 132 (which may be denoted as B), and at least one organic coating 133 (which may be denoted as C), and the at least one inorganic coating 132 is in contact with the base film 131. One base film may be disposed. One, two, three, four, or more inorganic coatings 132 may be disposed. One, two, three, four, or more organic coatings 133 may be disposed. In this embodiment of this application, a quantity of disposed inorganic coatings and a quantity of disposed organic coatings are not specifically limited, provided that the base film, the inorganic coating, and the organic coating are all included and one inorganic coating 132 is directly disposed in contact with the base film 131.

As shown in FIG. 2, in an embodiment of this application, the separator 13 includes one base film 131, one inorganic coating 132, and one organic coating 133. The base film 131, the inorganic coating 132, and the organic coating 133 are sequentially laminated, and the inorganic coating 132 is disposed between the base film 131 and the organic coating 133. The separator 13 with the structure may be denoted as an ABC structure.

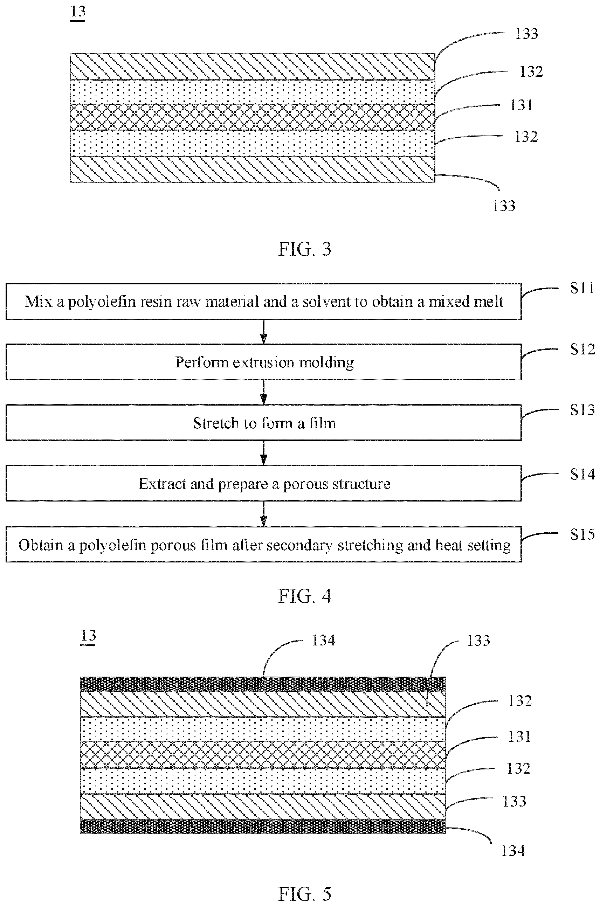

FIG. 3 is a schematic diagram of a structure of a separator according to another embodiment of this application. As shown in FIG. 3, in an embodiment of this application, the separator includes one base film 131, two inorganic coatings 132, and two organic coatings 133. The two inorganic coatings 132 are respectively disposed on two surfaces of the base film 131, and the two organic coatings 133 are respectively disposed on two sides of the base film 131 and are respectively disposed on surfaces of the inorganic coating 132. The separator 13 with the structure may be denoted as a CBABC structure.

In addition to the separators with the structures shown in FIG. 2 and FIG. 3, the separator in this embodiment of this application further includes, but is not limited to, the following structures: BAC, BABC, BACB, CABC, ABCB, CBACB, ABCBC, BACBC, CABCB, or the like.

It should be noted that when the separator includes a plurality of inorganic coatings, compositions of the inorganic coatings may be the same or may be different. When the separator includes a plurality of organic coatings, compositions of the organic coatings may be the same or may be different. When inorganic coatings are disposed on both sides of the base film, thicknesses of the inorganic coatings may be the same or may be different. The inorganic coatings disposed on both sides of the base film may be preferably disposed to have the same thickness, to implement symmetric distribution. Similarly, when organic coatings are disposed on both sides of the base film, thicknesses of the organic coatings may be the same or may be different. The organic coatings disposed on both sides of the base film may be preferably disposed to have the same thickness, to implement symmetric distribution.

In this embodiment of this application, the separator, the inorganic coating, and the organic coating are disposed in a layered manner, so that safety performance of a secondary battery can be more effectively improved. Compared with an organic-inorganic composite coating, the inorganic coating is disposed separately to ensure dimensional stability of the separator at a high temperature. The organic coating is disposed separately, so that the separator can obtain higher high temperature strength, and a film rupture temperature is significantly increased. In the separator in this embodiment of this application, after an organic heat-resistant resin forms a porous network layer, high mechanical strength can still be maintained at a high temperature. Therefore, in the separator in this embodiment of this application, the inorganic coating and the organic coating are disposed in a layered manner, so that high-temperature dimensional stability of the separator is ensured, high-temperature mechanical performance of the separator is ensured, the separator has a high film rupture temperature, and high heat resistance is obtained. In addition, in this embodiment of this application, the at least one inorganic coating is in contact with the base film, so that the base film can perform a better pore closing function. In addition, under protection of the organic coating, pore closing effect of the base film and the inorganic coating can be maintained at a higher temperature without failing due to film rupture. Finally, the separator has dimensional stability, does not rupture, and is in a good closed-pore state under a high temperature condition. For example, for the separator in this embodiment of this application, a pore closing temperature is less than or equal to 140°C, a film rupture temperature is greater than or equal to 220°C, a shrinkage rate at 150°C for 0.5 h is less than or equal to 5%, and an elongation rate is greater than or equal to 150%, so that integrity of the secondary battery is effectively improved.

To facilitate understanding of effect of the separator in this embodiment of this application on safety of a secondary battery, the following describes a possible function mechanism of the separator in this embodiment of this application. The following uses a lithium-ion battery as an example. A possible mechanism for improving safety of the lithium-ion battery by using the separator in this application is as follows:
(1) Normal working state: When a temperature of the lithium-ion battery is lower than a pore closing temperature of the separator, lithium ions normally pass through the separator, and the lithium-ion battery is in the normal working state.
(2) Mild thermal abuse or mechanical abuse state: When the lithium-ion battery is in the mild thermal abuse or mechanical abuse state, there is not much heat inside the lithium-ion battery. When the temperature reaches the pore closing temperature of the separator, pores in the polyolefin porous film start closing, and pore closing effect is better when an inorganic coating is used in combination. In this case, an ion path of the separator is cut off, which can suppress further heat generation inside the lithium-ion battery and prevent problems such as burning or explosion.
(3) Severe thermal or mechanical abuse: When the thermal or mechanical abuse state continues to deteriorate, and the heat inside the battery further increases, the separator faces a higher temperature. Under support of an organic coating, a closed-pore layer formed between the inorganic coating and the polyolefin porous film still maintains good pore closing effect, and the separator is in a closed-pore state. In this case, the inorganic coating and the organic coating cooperate with each other to maintain overall high-temperature dimensional stability and high temperature strength of the separator, and the separator has good dimensional integrity and some mechanical strength and does no rupture. In other words, the separator constantly separates positive and negative electrodes and forms an open circuit, which reduces a probability of a short circuit and ensures excellent safety of the battery.

The following describes the base film, the inorganic coating, and the organic coating in detail.

### Base film

Refer to both FIG. 2 and FIG. 3. In an embodiment of this application, the base film 131 may be a polyolefin porous film. A material for forming the polyolefin porous film may include a first polyolefin resin. Specifically, by way of example, the first polyolefin resin may be an ultra-high molecular weight polyethylene resin with a weight average molecular weight greater than or equal to 600,000, or may be an ultra-high molecular weight polyethylene resin with a weight average molecular weight of 600,000 to 5,000,000. Based on a total weight of the polyolefin porous film, a content of the first polyolefin resin is greater than 50%, and a melting point of the first polyolefin resin may be greater than 130°C, so that the polyolefin porous film has good mechanical processing performance and high mechanical strength.

In addition, in another embodiment of this application, the polyolefin porous film may further include a second polyolefin resin and a third polyolefin resin. A melting point of the second polyolefin resin may be less than the melting point of the first polyolefin resin, and a melting point of the third polyolefin resin may be greater than the melting point of the first polyolefin resin.

By way of example, the second polyolefin resin may be polyethylene whose melting point is lower than 130°C. A content of the second polyolefin resin is 0 to 45% based on the total weight of the polyolefin porous film. In the second polyolefin resin, a melting point range of polyethylene may be preferably 110°C to 130°C. To facilitate processing of the base film, the second polyolefin resin is preferably polyolefin with a molecular weight of 50,000 to 1,000,000. A pore closing temperature of the base film can be improved by adding polyethylene with a melting point lower than 130°C. A pore closing temperature of the separator is also crucial for safety performance of a secondary battery. When a temperature of the secondary battery rises, pores of the separator close quickly, and an ion path is cut off, so that the entire secondary battery is in an open circuit mode, which can greatly reduce short-circuit heat and prevent further heat accumulation. In an embodiment of this application, a pore closing temperature of the polyolefin porous film is less than or equal to 145°C, further preferably less than or equal to 140°C, and most preferably less than or equal to 135°C.

By way of example, the third polyolefin resin may be a polyolefin resin whose melting point is higher than 150°C, may be selected from at least one of polypropylene, poly-1-butylene, poly-1-pentene, poly-1-hexene, poly-4-methyl-1-pentene, poly-1-octene, polyvinyl acetate, polymethyl methacrylate, polystyrene, polydifluoroethylene, or polytetrafluoroethylene, and may be preferably a mixture of polypropylene and poly-4-methyl-1-pentene. When the polyolefin porous film contains the third polyolefin resin, and a content of the third polyolefin resin may be 5% to 30%. A film rupture temperature of the polyolefin porous film can be improved by adding the third polyolefin resin whose melting point is higher than 150°C. In an embodiment of this application, the film rupture temperature of the polyolefin porous film is greater than or equal to 155°C, further preferably greater than or equal to 160°C, and most preferably greater than or equal to 180°C.

It should be noted that, for pore closing of the base film, the polyethylene resin melts and flows or shrinks after a melting point is reached, to close original pores of the base film and achieve pore closing effect. If the pores in the base film pore are not completely closed, an internal short circuit can still occur, to cause thermal runaway. In addition to the composition of the base film, factors such as a weight per unit thickness, a porosity, a pore size, a thickness, and the like of the base film also affect the pore closing effect of the base film. When a porosity of the polyolefin porous film is larger, a quantity of micropores is larger, or when a pore size is larger, a larger amount of polyethylene resin is required to close initial pores, resulting in a higher pore closing difficulty and poor pore closing effect. In contrast, when the porosity is smaller, the quantity of micropores is smaller, or when the pore size is smaller, an amount of polyethylene resin required to closing pore is reduced, so that the pore closing difficulty is reduced, and a pore closing degree is maximal. However, if the porosity and the pore size are excessively small, ion transmission performance is affected, which affects a fast charging capability of the secondary battery. In an embodiment of this application, the porosity of the base film is less than 35%, preferably greater than 5% and less than 35%, and further preferably greater than 25% and less than 35%. An average pore size of the base film is less than 45 nm, and preferably less than 43 nm, to strike a balance between the safety performance and the fast charging capability of the secondary battery.

In addition, the thickness and weight of the polyolefin porous film also have some impact on the pore closing effect. When the thickness of the polyolefin porous film is large, for example, is greater than 16 µm, a content of the polyethylene resin in the polyolefin porous film is high, so that complete pore closing effect can be achieved. However, when the thickness of the polyolefin porous film is large, energy density of the secondary battery is affected. Therefore, the thickness of the polyolefin porous film may be set to 1 µm to 16 µm, preferably 1 µm to 12 µm, further preferably 1 µm to 9 µm, and further preferably 1 µm to 7 µm.

In addition, when a weight per unit thickness of the polyolefin porous film is larger, more raw materials for pore closing can be provided, and the pore closing effect is better. Therefore, in an embodiment of this application, a weight per unit thickness of the base film is greater than or equal to 0.62 g/m²/µm, and preferably greater than or equal to 0.64 g/m²/µm, to strike a balance between impact on safety and the energy density of the secondary battery.

In an embodiment of this application, both a transverse direction (transverse direction, TD) elongation at break and a machine direction (machine direction, MD) elongation at break of the polyolefin porous film are greater than or equal to 130%, preferably greater than or equal to 150%, and further preferably greater than or equal to 180%. Therefore, a film rupture temperature of the separator is improved.

The following describes a preparation process of a base film. It may be understood that the following preparation method is only an optional preparation method of a base film, and the preparation method of a base film is not limited to the following preparation method.

FIG. 4 shows a preparation method of a base film according to an embodiment of this application. As shown in FIG. 4, by way of example, in an embodiment of this application, the preparation method of a base film includes the following steps.

Step S11: Mix a polyolefin resin raw material and a solvent to obtain a mixed melt: Melt and mix the polyolefin resin raw material, the solvent, and an additive in a twin-screw extruder to form a uniform liquid phase, where a boiling point of the solvent is higher than a temperature of mixing.

The polyolefin resin raw material is designed according to a function required by a polyolefin porous film, and may be an ultra-high molecular weight polyethylene resin with a molecular weight of 500,000 to 2,000,000 and a melting point of 130°C to 138°C; or may be various combinations of polyethylene, and may contain copolymer polyethylene with a melting point of 120°C to 130°C and a molecular weight of 10,000 to 1,000,000, to improve a pore closing temperature of the polyolefin porous film; or may be a mixture of polyethylene and another type of polyolefin, and the another type of polyolefin is preferably polypropylene or poly-4-methyl-1-pentene, which is used to improve a film rupture temperature of the polyolefin porous film.

The solvent may be a fatty or ring hydrocarbon such as nonane, decane, decalin, p-xylene, undecane, dodecane, liquid paraffin, or the like, or a mineral oil fraction whose boiling point is close to that of the foregoing specific solvents.

The temperature of mixing needs to be higher than the melting point of the polyolefin resin raw material by 30°C to 50°C, and may be specifically 180°C to 270°C or 180°C to 230°C.

The additive may be one or more of an antioxidant, a nano inorganic filler, or a nucleating agent, or may be another additive that needs to be added according to an actual requirement of a product.

Step S12: Perform extrusion molding: The uniformly mixed melt is extruded through a slit die head, where the extruded melt is cooled on a cooling roller and then cast to form a gel-like sheet, the sheet is in a solid-liquid phase separation state of a liquid-phase solvent and solid-phase polyolefin, and a gap of the slit is generally 0.1 mm to 5 mm.

Step S13: Stretch to form a film: The gel-like sheet is heated and stretched to form reserved pores, and mechanical strength and a crystallinity are improved, where the stretching includes stretching in two directions: an MD and a TD, and a stretching manner may be selected from any one of bidirectional synchronous stretching, bidirectional asynchronous stretching, and bidirectional combined stretching (a combination of synchronous stretching and asynchronous stretching). To obtain a more uniform pore size, a bidirectional synchronous stretching manner is preferably used. In consideration of a design of mechanical characteristics of the polyolefin porous film, stretching ratios of MD stretching and TD stretching are 3 to 6, to help control an appropriate crystallinity, so that a good elongation and good mechanical strength are obtained. The stretching ratio is a ratio of a size of the gel-like sheet in a direction after stretching to a size of the gel-like sheet in the direction before stretching. For example, the stretching ratio in the MD direction is a ratio of a size of the gel-like sheet after stretching to a size of the gel-like sheet before stretching in the MD direction. The stretching ratio in the TD direction is a ratio of a size of the gel-like sheet after stretching to a size of the gel-like sheet before stretching in the TD direction.

Step S 14: Extract and prepare a porous structure: A stretched film is extracted by using an extractant, a solvent is removed from the film, and then the film is dried to obtain a film with a porous structure, where the extractant may be a volatile solvent such as dichloromethane, carbon tetrachloride, ether, pentane, or hexane.

Step S 15: Obtain the polyolefin porous film after secondary stretching and heat setting: The secondary stretching further needs to be performed on the extracted and dried porous film, where a temperature of the secondary stretching is between a crystal dispersion temperature and a melting point, preferably between 105°C and 130°C, and a stretching factor is preferably 1 to 2; and the polyolefin porous film, namely, the base film, is finally obtained after the heat setting. Some physical parameters of the polyolefin porous film, for example, a thermal shrinkage rate and an air permeability value may be adjusted in a specific range through the step of the heat setting

### Inorganic coating

Refer to both FIG. 2 and FIG. 3. The inorganic coating 132 is an inorganic heat-resistant layer. In an embodiment of this application, the inorganic coating 132 may include inorganic particles and an adhesive. A volume of each inorganic coating is used as a reference for measurement, and a volume percentage of the inorganic particles may be greater than 80%, preferably 85% to 99%, and further preferably 90% to 95%. A volume content of the inorganic particles in the inorganic coating may be, for example, 81%, 82%, 83%, 84%, 85%, 86%, 87%, 88%, 89%, 90%, 91%, 92%, 93%, 94%, 95%, 96%, 97%, 98%, or 99%.

In the inorganic coating 132, when the content of the inorganic particles is higher, dimensional stability is better, and thermal shrinkage is smaller. In the inorganic coating, a specific amount of adhesive is added to form a bonding force between the inorganic particles and between the inorganic particles and the polyolefin porous film, to form the stable inorganic coating 132.

By way of example, the inorganic particles may be selected from at least one of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, or mesoporous molecular sieves.

In an embodiment of this application, the adhesive may be at least one of polyacrylate or hexafluoropropylene-polydifluoroethylene.

In an embodiment of this application, a particle size D50 of the inorganic particles is less than or equal to 2 µm, and preferably less than or equal to 500 nm. The particle size D50 of the inorganic particles may be, typically but not limited to, for example, 20 nm, 30 nm, 40 nm, 50 nm, 60 nm, 70 nm, 80 nm, 90 nm, 100 nm, 120 nm, 140 nm, 160 nm, 200 nm, 250 nm, 300 nm, 400 nm, 500 nm, 700 nm, 800 nm, 1000 nm, 1500 nm, 1800 nm, or the like.

In an embodiment of this application, a thickness of the inorganic coating may be less than or equal to 4 µm, for example, may be 4 µm, 3.5 µm, 3 µm, 2.5 µm, 2 µm, 1.5 µm, 1 µm, or the like. In an embodiment of this application, a thickness of each inorganic coating is less than half of a thickness of the polyolefin porous film.

The inorganic coating is mainly used to improve overall thermal shrinkage performance of the separator. On the basis of the same thermal shrinkage performance provided by the inorganic coating, when the inorganic coating is thinner, pores formed between the inorganic particles are smaller. When the polyolefin porous film performs a pore closing function, a required amount of molten polyolefin infiltrated into the inorganic coating is smaller, and pore closing effect is better. Therefore, in the inorganic coating, the particle size D50 of the inorganic particles is less than or equal to 2 µm, particularly, D50 is less than or equal to 500 nm, and the thickness of each inorganic coating is less than or equal to 4 µm, so that the inorganic coating can achieve excellent pore closing effect while providing excellent thermal shrinkage resistance performance.

The following describes a preparation process of an inorganic coating. It may be understood that the following preparation method is only an optional preparation method of an inorganic coating, and the preparation method of an inorganic coating is not limited to the following preparation method. An aqueous solvent system or an organic solvent system may be selected to prepare an inorganic coating.

By way of example, in an embodiment of this application, the preparation method of an inorganic coating includes the following steps. When an aqueous solvent system is selected, inorganic particles, an adhesive polyacrylate, a thickening agent carboxymethylcellulose sodium (carboxymethylcellulose sodium, CMC), a dispersant, and water are uniformly dispersed in specific proportions, are then coated on a surface of the polyolefin porous film, and are then dried to remove moisture. In another embodiment of this application, when an organic solvent system is selected, an adhesive polyvinylidene fluoride (polyvinylidene fluoride, PVDF) and an organic solvent, for example, N-methyl-2-pyrrolidone (N-Methyl-2-pyrrolidone, NMP), are dissolved into a uniform solution, and then inorganic particles are added, dispersed uniformly, and then coated on a surface of a polyolefin porous film, and then processes such as solidification, water washing, and drying are performed to obtain a composite film.

### Organic coating

Refer to FIG. 2 and FIG. 3. In an embodiment of this application, each organic coating 133 contains an organic heat-resistant resin with a melting point or decomposition temperature greater than or equal to 200°C, to provide high temperature strength for the separator 13. The melting point of the organic heat-resistant resin is a temperature at which the organic heat-resistant resin changes from a solid state to a molten state, and the decomposition temperature of the organic heat-resistant resin is a temperature at which molecular chains of the organic heat-resistant resin break. Because there are various types of organic heat-resistant resins, when the organic heat-resistant resin first melts as a heating temperature increases, the melting point of the organic heat-resistant resin needs to be limited to be greater than or equal to 200°C. When the molecular chains of the organic heat-resistant resin break first as the heating temperature increases, the decomposition temperature of the organic heat-resistant resin needs to be limited to be greater than or equal to 200°C.

A volume content of the organic heat-resistant resin in each organic coating 133 is 60% to 99%, to form a stable and continuous network structure, so that the organic heat-resistant resin has high temperature stability. A volume of each organic coating 133 is used as a reference for measurement, the volume content of the organic heat-resistant resin may be, for example, 61%, 65%, 70%, 75%, 80%, 85%, 90%, 95%, or 99%. In the organic coating, when a content of the organic heat-resistant resin whose melting point or decomposition temperature is greater than or equal to 200°C is higher, high temperature strength of the organic coating is higher.

By way of example, in the organic coating 133, the organic heat-resistant resin may be selected from at least one of aromatic polyamide, polyimide, polyamide-imide, polyetherimide, polysulfone, polyketone, polyether ketone, or polytetrafluoroethylene. The aromatic polyamide may be selected from at least one of poly-p-phenylene terephthamide or poly(m-phenylene isophthalamide). In consideration of comprehensive factors such as temperature resistance, flame retardance, processability of an organic solvent, and the like, the organic heat-resistant resin is most preferably poly(m-phenylene isophthalamide).

In an embodiment of this application, inorganic particles may be added to the organic coating 133, to improve processability of the organic coating 133, for example, improve performance such as anti-wrinkle, anti-edge collapse, and the like of the organic coating 133. In addition, in the organic coating 133, the addition of inorganic particles can help the organic coating 133 form a porous structure, to improve air permeability of the organic coating.

In an embodiment of this application, in each organic coating 133, a volume percentage is used as a reference for measurement, and an amount of added inorganic particles may not exceed 40%. If the amount of added inorganic particles is excessively high, the content of the organic heat-resistant resin is slightly low. The inorganic particles are scattered in a fiber network of the organic heat-resistant resin, which destroys a fiber network structure formed by the organic heat-resistant resin and forms many strength defect sites. Therefore, the excessively high amount of added inorganic particles adversely affects the high temperature strength of the organic coating.

In an embodiment of this application, a thickness of each organic coating 133 is 0.5 µm to 5 µm, and preferably 1 µm to 4 µm, so that the organic coating 133 has excellent heat resistance and avoids a loss of energy density of the secondary battery.

When only one organic coating is disposed in the separator, the organic coating is disposed in the secondary battery, and preferably disposed facing a cathode of the secondary battery.

The following describes a preparation process of an organic coating. It may be understood that the following preparation method is only an optional preparation method of an organic coating, and the preparation method of an organic coating is not limited to the following preparation method.

By way of example, in an embodiment of this application, a procedure of preparing an organic heat-resistant layer is as follows: An organic heat-resistant resin is dissolved in a good solvent of the resin, an appropriate amount of pore-making agent may be added to form a slurry with a specific concentration, the slurry is coated on a surface of a polyolefin porous film or a surface of a composite film covered with an inorganic coating, and a separator covered with an organic coating is obtained after solidification, water washing, and drying. In an optional embodiment of this application, to improve solubility of poly(m-phenylene isophthalamide), LiCl or CaCl2 may be added to improve the solubility. A coating manner of the slurry is not limited to the following: reverse roll coating, gravure coating, extrusion coating, scrape coating, wire bar coating, and spraying.

During preparation of the slurry of the organic coating, the good solvent may be any one or more selected from dimethylacetamide, dimethylformamide, dimethyl sulfoxide, and N-methyl-2-pyrrolidone. In the slurry, the volume content of the organic heat-resistant resin may be 3% to 10%, and a volume content of the good solvent is greater than 50%. According to a design requirement of organic coating, inorganic particles may be dispersed in the slurry, and a total volume content of the inorganic particles and the organic heat-resistant resin in the slurry may be less than 40%.

The pore forming morphology and uniformity of the organic coating may be improved by adding an appropriate amount of pore-making agent to the slurry. The pore-making agent may be one or more selected from ethanol, propanol, isopropanol, n-butanol, isobutanol, sec-butanol, tert-butanol, neopentyl alcohol, ethylene glycol, propylene glycol, tripropylene glycol, and water. A volume content of the pore-making agent in the slurry is less than or equal to 50%. A volume content of water in the mixed solution of water and the good solvent is greater than or equal to 50%.

Through the optimization of the composition of the base film, the inorganic coating, and the organic coating, a pore closing temperature of the separator in this embodiment of this application may be less than 145°C, preferably less than or equal to 140°C, and further preferably less than or equal to 137°C; a film rupture temperature is greater than 170°C, preferably greater than or equal to 220°C, and further preferably greater than or equal to 260°C; and elongations in two directions are both greater than or equal to 130%, preferably greater than or equal to 150%, and further preferably greater than or equal to 180%. A thermal shrinkage rate of 30 minutes at 150°C is less than or equal to 5%, preferably less than or equal to 4%, and further preferably less than or equal to 3%.

FIG. 5 is a schematic diagram of a structure of a separator according to an embodiment of this application. As shown in FIG. 5, in addition to the base film 131, the inorganic coating 132, and the organic coating 133, the separator 13 in this embodiment of this application may further include an adhesive layer 134. There may be one or two adhesive layers 134, disposed on an outermost surface of the separator 13. When only one adhesive layer 134 is disposed in the separator 13, the adhesive layer 134 may be disposed on an outermost surface on one side of the separator 13. When the separator 13 contains two adhesive layers 134, the two adhesive layers 134 may be respectively disposed on outermost surfaces on two sides of the separator 13.

### Adhesive layer

Refer to FIG. 5. In an embodiment of this application, the adhesive layer 134 contains an adhesive resin, and the adhesive resin may be selected from at least one of an acrylic resin and a hexafluoropropylene-polydifluoroethylene resin. The acrylic adhesive resin may be, for example, polymethyl methacrylate (polymethyl methacrylate, PMMA) and a modified product thereof.

There is no special limitation on a preparation method of the adhesive layer, and water is preferably used as a solvent system. The preparation method is similar to a preparation method of an aqueous inorganic coating.

A coating processing manner of the adhesive layer includes, but is not limited to, at least one of reverse roll coating, gravure coating, rotary spraying, and air spraying.

The morphology of the adhesive layer is that agglomerates of particles of the adhesive resin are intermittently and irregularly distributed, and a thickness of each adhesive layer is 1 µm µm to 8 µm.

When the separator 13 contains two adhesive layers 134, materials of different adhesive layers 134 may be the same or may be different.

The adhesive layer 134 may implement interface bonding between the separator and electrode plates of the secondary battery, so that the secondary battery is disposed in an integrated structure, and hardness of the battery is improved, to improve mechanical safety performance of the secondary battery.

Based on a same technical concept, this application further provides a secondary battery. The secondary battery includes a positive electrode plate, a negative electrode plate, an electrolyte, and the separator in the foregoing embodiments of this application. The separator is located between the positive electrode plate and the negative electrode plate. The electrolyte is filled between the positive electrode plate and the negative electrode plate and infiltrates the separator.

The secondary battery in embodiments of this application includes, but is not limited to, a lithium-ion battery, a sodium-ion battery, a potassium-ion battery, a calcium-ion battery, a magnesium-ion battery, or the like.

The secondary battery in embodiments of this application includes the separator in embodiments of this application. Because the separator in embodiments of this application has a high film rupture temperature and a low shrinkage rate, the secondary battery in embodiments of this application may have good safety.

The following describes the secondary battery using the separator in this application in detail with reference to specific embodiments and comparative examples.

### Example 1

### This application is a lithium-ion battery. Specific raw materials and a preparation process of the lithium-ion battery are as follows:

### Step (1): Preparation of a polyolefin porous film of a base film (A)

A polyolefin composition formed by ultra-high molecular weight polyethylene with a melting point of 136°C and a molecular weight of 1,000,000, low-melting point polyethylene with a melting point of 125°C and a molecular weight of 600,000, and polypropylene with a melting point of 165°C and a molecular weight of 500,000 in a ratio of 55:30:15 was melted and mixed with paraffin oil in a twin-screw extruder at a high temperature. A ratio of the polyolefin composition to the paraffin oil is 25:75. A mixing temperature is 190°C to 220°C. The uniformly mixed melt was extruded through a slit die head, and was cast on a cooling roller to form a gel sheet at a cooling speed of 85°C/min. Then, the gel sheet was first stretched to five times in an MD direction and was then stretched to five times in a TD direction. The stretched film was then processed by a dichloromethane extraction groove to remove the paraffin oil. The extracted film was dried at a low temperature of 50°C, and then secondary stretching was performed on the film in the TD direction at 118°C. A stretching factor is 1.05 times. Finally, the polyolefin porous film was obtained after heat setting at 120°C.

### Step (2): Preparation of an inorganic coating (B)

Aluminum oxide powder with D50 of 0.5 µm±0.1 µm, a polyacrylate adhesive, a thickening agent (carboxymethylcellulose sodium), and a dispersant (polyvinyl alcohol) were uniformly dispersed in deionized water at a high speed in a ratio of 90:6.3:3.5:0.2 to form a slurry. The slurry has a solid content of 30% and a viscosity of 500 mpa.s. The uniformly dispersed slurry was coated in a manner of gravure reverse roll coating, to form inorganic coatings in sequence on two sides of the polyolefin porous film obtained in step (1), and moisture in a wet film was removed in a drying manner using a hot air oven. A thickness of each inorganic heat-resistant layer is 1 µm.

### Step (3): Preparation of an organic coating (C)

Poly(m-phenylene isophthalamide) (meta-aramid for short) and inorganic particles were dissolved in a volume ratio of 90:10 in a mixed solvent of a good solvent N-methyl-2-pyrrolidone and a pore-making agent propylene glycol to form a slurry. A volume ratio of N-methyl-2-pyrrolidone to propylene glycol is 60:40. A mass concentration of the meta-aramid is 6.5%. The slurry was coated in a manner of gravure reverse roll coating on two sides simultaneously, to form organic coatings on two surfaces of a composite film coated with the inorganic coatings obtained in step (2), and a separator was obtained after the composite film was dried. A thickness of each organic heat-resistant layer is 2 µm.

A structure of the separator formed in this embodiment is in a CBABC form. Refer to FIG. 2. From one outermost side to the other outermost side of the separator in a thickness direction, the separator sequentially includes an organic coating, an inorganic coating, a base film, an inorganic coating, and an organic coating.

### Step (4): Battery assembly

Manufacturing of a positive electrode plate: A positive electrode active material lithium cobaltate, a conductive agent conductive carbon black, and an adhesive polyvinylidene fluoride were uniformly stirred in a mass ratio of 97:1.5:1.5 in a solvent N-methyl-2-pyrrolidone and were uniformly mixed to form a positive electrode slurry. The positive electrode slurry was uniformly coated on both sides of an aluminum foil by using a coating device, and the solvent N-methyl-2-pyrrolidone was removed through drying in an oven. A coated electrode plate was made into the positive electrode plate after processes of cold-pressing, striping, and tab welding.

Manufacturing of a negative electrode plate: A negative electrode active material artificial graphite, a thickening agent carboxymethylcellulose sodium, and an adhesive styrenebutadiene rubber were uniformly stirred in a weight ratio of 97:1.3:1.7 in deionized water and were mixed to form a negative electrode slurry. The negative electrode slurry is uniformly coated on two sides of a copper foil by using a coating device. An electrode plate dried by an oven was made into the negative electrode plate after processes of cold-pressing, striping, and tab welding.

The positive electrode plate, the negative electrode plate, and the separator in this embodiment were wound together to manufacture a cell, and then a lithium-ion battery was made through processes such as packaging, baking, electrolyte filling, standing, formation, gas removal, and grading, and the like.

A capacity of the electrochemical cell is 4.5 Ah, and an operating voltage range is 3.0 V to 4.45 V.

### Examples 2 to 47

Example 2 to Example 47 are lithium-ion batteries. For a preparation method of a separator, refer to Example 1. Specific raw materials and structural parameters of the separator are listed in Table 1.

For the lithium-ion batteries in Examples 42 to 47, in a preparation process of the separator, after an organic coating was coated, a step of coating an adhesive layer is further included. A specific coating process of the adhesive layer is as follows: dissolving adhesive resin PVDF powder or PMMA powder using water as a solvent, and adding an acrylic adhesive to form a mixture with a concentration of 15%. A mass ratio of the adhesive resin PVDF powder or the PMMA powder to the acrylic adhesive is 95:5. After the mixture was dispersed and ground at a high speed, the uniformly dispersed slurry was coated by using a rotating spraying device or a gravure reverse roll device on one or two sides of the separator obtained in step (3), and the separator containing the adhesive layer was obtained after drying.

### Comparative example 1

Comparative example 1 is a lithium-ion battery, and a preparation process is as follows:
Base film: A preparation process of the base film is the same as that in Example 1.
Inorganic coating: None
Organic coating: An organic heat-resistant coating slurry further contains inorganic particles. A volume ratio of an organic heat-resistant resin to the inorganic particles is 40:60. Other preparation methods are the same as those in Example 1.
Composite separator structure: The composite separator structure is in a CAC form, that is, organic coating/substrate/organic coating.

### Comparative example 2

Comparative example 2 is a lithium-ion battery, and a preparation process is as follows:
Base film: Only ultra-high molecular weight polyethylene with a melting point of 136°C and a molecular weight of 1,000,000 is used as a resin raw material. In a process of manufacturing the base film, a cooling speed of a casting is 70°C/min, factors of primary stretching in an MD direction and a TD direction are both 7, and a factor of secondary stretching in the TD direction is 1.1. Other manufacturing parameters are the same as those in Example 1.
Inorganic coating: None
Organic coating: An organic heat-resistant coating slurry further contains inorganic particles. A volume ratio of an organic heat-resistant resin to the inorganic particles is 40:60. Other preparation methods are the same as those in Example 1.
Composite separator structure: The composite separator structure is in a CAC form, that is, organic coating/substrate/organic coating.

### Comparative example 3

Comparative example 3 is a lithium-ion battery, and a preparation process is as follows:
Base film: Only ultra-high molecular weight polyethylene with a melting point of 136°C and a molecular weight of 1,000,000 is used as a resin raw material. In a process of manufacturing the base film, a cooling speed of a casting is 70°C/min, factors of primary stretching in an MD direction and a TD direction are both 7, and a factor of secondary stretching in the TD direction is 1.1. Other manufacturing parameters are the same as those in Example 1.
Inorganic coating: None
Organic coating: The organic coating contains only an organic heat-resistant resin. Other preparation methods are the same as those in Example 1.
Composite separator structure: The composite separator structure is in a CAC form, that is, organic coating/substrate/organic coating.

### Comparative example 4

Comparative example 4 is a lithium-ion battery, and a preparation process is as follows:
Base film: A preparation method is the same as that of the base film in Comparative example 3.
Inorganic coating: A preparation method is the same as that of the inorganic coating in Example 1.
Organic coating: None
Composite separator structure: The composite separator structure is in a BAB form, that is, organic coating/substrate/organic coating.

### Comparative examples 5 to 15

Comparative example 5 to Comparative example 15 are lithium-ion batteries. For a preparation method of a separator, refer to the preparation processes of a base film, an inorganic coating, or an organic coating in Example 1 or Comparative examples 1 to 4. Specific raw materials and structural parameters of the separator are listed in Tables 1 to 5.

For a coating process of an adhesive layer in Comparative example 13 to Comparative example 15, refer to Example 42 to Example 47.

### Performance test

Performance parameters, for example, an elongation of a base film, a thickness of the base film, a pore closing temperature of a separator, a film rupture temperature, a pore size, thermal shrinkage, and the like, of the separators in Examples 1 to 47 and Comparative examples 1 to 15 are tested, and a foreign object extrusion test and a battery hot box test are performed on a corresponding lithium-ion battery. Test results are listed in Table 1 to Table 5.

A test process is as follows:
1. Elongation test of a base film in a separator:
A base film is cut in an MD direction and a TD direction into strips with a width of 15 mm and a length greater than 50 mm (for example, 100 mm). To test an elongation in the MD direction, the width of 15 mm is in the TD direction of the base film, and the length of 100 mm is in the MD direction of the base film. To test an elongation in the TD direction, the width 15 mm is in the MD direction of the base film, and the length of 100 mm is in the TD direction of the base film. A multifunctional testing machine is used to perform a stretching test. Test conditions are as follows: A width of a sample is 15 mm. A length of a substrate between upper and lower fixtures is fixed to 50 mm before testing, and the length is denoted as L₀. (A length of a cut sample is larger than 50 mm, to facilitate clamping of the base film by the fixtures.) A stretching speed of the testing machine is 100 mm/min. The sample starts to be stretched until the sample breaks. A distance between fixtures is denoted as Li. Elongation = (L₁ - L₀)/L₀.
2. Thickness test for a base film:
Thicknesses of at least 10 points are measured with a permyriad thickness gauge in the TD direction of the base film, and an average value of the thicknesses is used as a thickness of the base film.
3. Pore closing temperature:
A test is performed by using a method of internal resistance with an increase in temperature. A separator was placed in a stainless steel fixture or another similar fixture, and an appropriate amount of electrolyte was filled. The fixture was placed in an oven, and the temperature is increased at 2°C/min. A resistance value and a temperature of the fixture are monitored simultaneously. A temperature at which the resistance value increases suddenly (to 10 times) is the pore closing temperature of the separator.
4. Film rupture temperature:
A thermomechanical analysis method (TMA) is used. Valid test sizes between test fixtures are as follows: A sample has a width of 5 mm and a length of 10 mm. A loading force is 11.7 mN. A temperature increase speed is 10°C/min. A temperature range is the room temperature to 400°C. The film rupture temperature is a temperature at which the sample ruptures or breaks during testing under the foregoing test conditions.
5. Pore size:
An average pore size at a pore throat is measured by using a bubble point method.
6. Thermal shrinkage rate:
A separator of 10 cm×10 cm is cut, and the MD direction and the TD direction are marked. The cut separator is placed in an oven at 150°C and baked for 0.5 hours. Sizes before and after the baking were measured. Thermal shrinkage rate = (size before the baking - size after the baking)/size before the baking.
7. Foreign object extrusion test for a battery:
An electrochemical cell is tested based on a 100% charge depth (step of charge, SOC). That is, the electrochemical cell is fully charged in a standard charge mode for 12 hours to 24 hours. The largest surface of the electrochemical cell is pressed in parallel to a table surface. An M1.4×3.0 screw is placed on a top surface of the electrochemical cell, and then a metal block is used to vertically press the electrochemical cell. When a pressure reaches 13±1 kN, the pressure is released. Each sample is tested only once in one direction. If the electrochemical cell does not catch fire or explode, the electrochemical cell passes the test. 10 groups of tests are performed for each group of samples, and a pass rate is recorded.
8. Hot box test for a battery:
After an electrochemical cell is fully charged in a standard charging mode, a test is performed within 12 hours to 24 hours. A convection manner or a circulating hot air chamber is used to perform heating with a start temperature of 25±3°C at a temperature change rate of 5±2°C/min. The temperature is increased to 140±2°C and kept for 30 minutes, and then the test ends. If the electrochemical cell does not catch fire or explode, the electrochemical cell passes the test. 10 groups of tests are performed for each group of samples, and a pass rate is recorded.
9. Overcharge performance test for a battery: Discharge of a battery is tested, and then the battery is placed in an explosion-proof box. A thermocouple is connected (a contact of the thermocouple is fixed at a center position on a surface of an electrochemical cell), and a power supply is connected to charge the battery. The battery is charged to 4.8 V at a constant current of 3C, until a voltage reaches a maximum value. The test may be stopped if any of the following conditions is met:
(a) The battery has been continuously charged for 7 hours.
(b) A temperature of the electrochemical cell decreases to be 20% lower than a peak value.

If the electrochemical cell does not catch fire or explode, the electrochemical cell passes the test.
10. Processing excellent rate of a separator: An area of a separator before coating is S1, and an area of a separator that meets appearance requirements after coating and wounding is S2. A processing excellent rate is S2/S1* 100%. The separator that meets the appearance requirements does not have curls, wrinkles, uneven winding, or gauge bands.
11. Air permeability value of a separator: A test is performed by using an air permeability tester of Asahi Seiko Co., Ltd. An air permeability value of a separator sample is tested by adjusting an inlet air pressure to 0.25 MPa and adjusting a test pressure to 0.05 MPa for test duration of 5s.

**Table 1**

| Separator characteristics | | Example 1 | Example 2 | Example 3 | Example 4 | Example 5 | Example 6 | Example 7 | Example 8 |
|---|---|---|---|---|---|---|---|---|---|
| Base film (A) | Polyolefin resin 1 (raw material/me lting point/molec ular weight) | PE/136° C/100±3 00,000 | PE/136° C/100±3 00,000 | PE/136° C/100±3 00,000 | PE/136° C/100±3 00,000 | PE/136° C/100±3 00,000 | PE/136° C/100±3 00,000 | PE/136° C/100±3 00,000 | PE/136° C/100±3 00,000 |
| | Polyolefin resin 2 (raw material/me lting point/molec ular weight) | PE/125° C/60±20 0,000 | PE/125° C/60±20 0,000 | PE/125° C/60±20 0,000 | PE/125° C/60±20 0,000 | PE/125° C/60±20 0,000 | / | PE/120° C/60±20 0,000 | PE/125° C/60±20 0,000 |
| | Polyolefin resin 3 (raw material/me lting point/molec ular weight) | PP/165° C/50±20 0,000 | PP/165° C/50±20 0,000 | PP/165° C/50±20 0,000 | PP/165° C/50±20 0,000 | PMP/240 °C/50±2 00,000 | / | / | PP/165° C/50±20 0,000 |
| | Thickness (um) | 5 | 5 | 5 | 5 | 5 | 5 | 5 | 5 |
| | Porosity (%) | 32 | 32 | 32 | 32 | 32 | 32 | 32 | 32 |
| | Average pore size (nm) | 40 | 40 | 40 | 40 | 40 | 40 | 40 | 40 |
| | Elongation (MD/TD, %) | 190/190 | 150/150 | 170/170 | 220/220 | 190/190 | 70/70 | 70/70 | 70/70 |
| | Weight per unit thickness g/m²/um | 0.72 | 0.72 | 0.72 | 0.72 | 0.72 | 0.62 | 0.62 | 0.62 |
| | Pore closing temperature (°C) | 136 | 136 | 136 | 136 | 136 | 141 | 132 | 136 |
| | Film rupture temperature (°C) | 165 | 165 | 165 | 165 | 210 | 150 | 145 | 165 |
| Inorganic coating (B) | Type of inorganic particles | Al₂O₃ | Al₂O₃ | Al₂O₃ | Al₂O₃ | Al₂O₃ | Al₂O₃ | Al₂O₃ | Al₂O₃ |
| | Volume content of inorganic particles (%) | 90 | 90 | 90 | 90 | 90 | 90 | 90 | 90 |
| | Layer quantity | 2 | 2 | 2 | 2 | 2 | 2 | 2 | 2 |
| Organic coating (C) | Organic heat-resistant resin | Meta-aramid | Meta-aramid | Meta-aramid | Meta-aramid | Meta-aramid | Meta-aramid | Meta-aramid | Meta-aramid |
| | Volume content of a resin (%) | 90 | 90 | 90 | 90 | 90 | 90 | 90 | 90 |
| | Volume content of inorganic particles (%) | 10 | 10 | 10 | 10 | 10 | 10 | 10 | 10 |
| | Layer quantity | 2 | 2 | 2 | 2 | 2 | 2 | 2 | 2 |
| Separator structure | | CBABC | CBABC | CBABC | CBABC | CBABC | CBABC | CBABC | CBABC |
| Pore closing temperature (°C) | | 137 | 137 | 137 | 137 | 137 | 142 | 134 | 137 |
| Film rupture temperature (°C) | | 280 | 280 | 280 | 280 | 320 | 250 | 250 | 280 |
| Elongation (MD/TD, %) | | 180/180 | 130/130 | 150/150 | 200/200 | 180/180 | 50/50 | 50/50 | 50/50 |
| Thermal shrinkage at 150°C for 0.5 h (%) | | 3.00% | 3.0% | 3.0% | 3.0% | 3.00% | 3.00% | 3.50% | 3.00% |
| Pass rate of the foreign object extrusion test for a battery | | 95% | 85% | 90% | 95% | 100% | 80% | 80% | 90% |
| Pass rate of the hot box test for a battery at 140°C | | 100% | 100% | 100% | 100% | 100% | 80% | 90% | 100% |

**Table 1 (continued 1)**

| Separator characteristics | | Example 9 | Example 10 | Example 11 | Example 12 | Example 13 | Example 14 | Example 15 | Example 16 |
|---|---|---|---|---|---|---|---|---|---|
| Base film (A) | Polyolefin resin 1 (raw material/me lting point/molec ular weight) | PE/136° C/100±300,000 | PE/136° C/100±300,000 | PE/136° C/100±300,000 | PE/136° C/100±300,000 | PE/136° C/100±300,000 | PE/136° C/100±300,000 | PE/136° C/100±300,000 | PE/136° C/100±300,000 |
| | Polyolefin resin 2 (raw material/me lting point/molec ular weight) | PE/125° C/60±20 0,000 | / | PE/125° C/60±20 0,000 | PE/125° C/60±20 0,000 | PE/125° C/60±20 0,000 | PE/125° C/60±20 0,000 | PE/125° C/60±20 0,000 | PE/125° C/60±20 0,000 |
| | Polyolefin resin 3 (raw material/me lting point/molec ular weight) | / | / | PP/165° C/50±20 0,000 | PP/165° C/50±20 0,000 | PP/165° C/50±20 0,000 | PP/165° C/50±20 0,000 | PP/165° C/50±20 0,000 | PP/165° C/50±20 0,000 |
| | Thickness (um) | 5 | 5 | 4 | 7 | 9 | 12 | 14 | 5 |
| | Porosity (%) | 32 | 32 | 34 | 32 | 38 | 38 | 40 | 32 |
| | Average pore size (nm) | 40 | 40 | 40 | 40 | 40 | 40 | 40 | 38 |
| | Elongation (MD/TD, % ) | 190/190 | 190/190 | 70/70 | 220/220 | 220/220 | 220/220 | 220/220 | 190/190 |
| | Weight per unit thickness g/m²/um | 0.72 | 0.72 | 0.64 | 0.63 | 0.62 | 0.62 | 0.62 | 0.72 |
| | Pore closing temperature (°C) | 136 | 141 | 136 | 136 | 136 | 136 | 136 | 135 |
| | Film rupture temperature (°C) | 150 | 150 | 163 | 167 | 167 | 167 | 167 | 165 |
| Inorganic coating (B) | Type of inorganic particles | Al₂O₃ | Al₂O₃ | Al₂O₃ | Al₂O₃ | Al₂O₃ | Al₂O₃ | Al₂O₃ | Al₂O₃ |
| | Volume content of inorganic particles (%) | 90 | 90 | 90 | 90 | 90 | 90 | 90 | 90 |
| | Layer quantity | 2 | 2 | 2 | 2 | 2 | 2 | 2 | 2 |
| Organic coating (C) | Organic heat-resistant resin | Meta-aramid | Meta-aramid | Meta-aramid | Meta-aramid | Meta-aramid | Meta-aramid | Meta-aramid | Meta-aramid |
| | Volume content of a resin (%) | 90 | 90 | 90 | 90 | 90 | 90 | 90 | 90 |
| | Volume content of inorganic particles (%) | 10 | 10 | 10 | 10 | 10 | 10 | 10 | 10 |
| | Layer quantity | 2 | 2 | 2 | 2 | 2 | 2 | 2 | 2 |
| Separator structure | | CBABC | CBABC | CBABC | CBABC | CBABC | CBABC | CBABC | CBABC |
| Pore closing temperature (°C) | | 137 | 142 | 138 | 136 | 136 | 136 | 136 | 136 |

| Separator characteristics | Example 9 | Example 10 | Example 11 | Example 12 | Example 13 | Example 14 | Example 15 | Example 16 | |
|---|---|---|---|---|---|---|---|---|---|
| Film rupture temperature (°C) | 250 | 250 | 270 | 280 | 280 | 280 | 280 | 280 | |
| Elongation (MD/TD, %) | 180/180 | 180/180 | 50/50 | 180/180 | 180/180 | 180/180 | 180/180 | 180/180 | |
| Thermal shrinkage at 150°C for 0.5 h (%) | 3.50% | 3.00% | 4.00% | 3.00% | 3.00% | 3.00% | 3.00% | 3.00% | |
| Pass rate of the foreign object extrusion test for a battery | 95% | 95% | 85% | 98% | 98% | 98% | 98% | 95% | |
| Pass rate of the hot box test for a battery at 140°C | 90% | 80% | 95% | 100% | 100% | 100% | 100% | 100% | |

**Table 1 (continued 2)**

| Separator characteristics | | Comparative example 1 | Comparative example 2 | Comparative example 3 | Comparative example 4 |
|---|---|---|---|---|---|
| Base film (A) | Polyolefin resin 1 (raw material/melting point/molecular weight) | PE/136°C/100 ±300,000 | PE/136°C/100 ±300,000 | PE/136°C/100 ±300,000 | PE/136°C/100 ±300,000 |
| | Polyolefin resin 2 (raw material/melting point/molecular weight) | PE/125°C/60± 200,000 | / | / | / |
| | Polyolefin resin 3 (raw material/melting point/molecular weight) | PP/165°C/50± 200,000 | / | / | / |
| | Thickness (um) | 5 | 5 | 5 | 5 |
| | Porosity (%) | 32 | 32 | 32 | 32 |
| | Average pore size (nm) | 40 | 40 | 40 | 40 |
| | Elongation (MD/TD, %) | 190/190 | 70/70 | 70/70 | 70/70 |
| | Weight per unit thickness g/m²/um | 0.72 | 0.62 | 0.62 | 0.62 |
| | Pore closing temperature (°C) | 136 | 141 | 141 | 141 |
| | Film rupture temperature (°C) | 165 | 150 | 150 | 150 |
| Inorganic coating (B) | Type of inorganic particles | / | / | / | Al₂O₃ |
| | Volume content of inorganic particles (%) | / | / | / | 90 |
| | Layer quantity | / | / | / | 2 |
| Organic coating (C) | Organic heat-resistant resin | Meta-aramid | Meta-aramid | Meta-aramid | / |
| | Volume content of a resin (%) | 40 | 40 | 100 | / |
| | Volume content of inorganic particles (%) | 60 | 60 | 0 | / |
| | Layer quantity | 2 | 2 | 2 | / |
| Separator structure | | CAC | CAC | CAC | BAB |
| Pore closing temperature (°C) | | 142 | 145 | 146 | 141 |
| Film rupture temperature (°C) | | 200 | 180 | 200 | 155 |
| Elongation (MD/TD, %) | | 180/180 | 50/50 | 50/50 | 50/50 |

| Separator characteristics | Comparative example 1 | Comparative example 2 | Comparative example 3 | Comparative example 4 | |
|---|---|---|---|---|---|
| Thermal shrinkage at 150°C for 0.5 h (%) | 10.00% | 10.00% | 15.00% | 2.50% | |
| Pass rate of the foreign object extrusion test for a battery | 60% | 50% | 30% | 40% | |
| Pass rate of the hot box test for a battery at 140°C | 60% | 50% | 30% | 40% | |

In Examples 1 to 16 and Comparative example 4, particle sizes D50 of the inorganic particles in the inorganic coating fall within a range of 0.5 µm±0.1 µm, and single-layer thicknesses of the inorganic coating are 2 µm to 3 µm. In Examples 1 to 16 and Comparative examples 1 to 3, single-layer thicknesses of the organic coating are 2 µm to 3 µm.

**Table 2**

| Separator characteristics | | Example 1 | Example 17 | Example 18 | Example 19 | Example 20 | Example 21 | Example 22 | Example 23 |
|---|---|---|---|---|---|---|---|---|---|
| Base film (A) | Polyolefin substrate | Substrate in Example 1 | Substrate in Example 1 | Substrate in Example 1 | Substrate in Example 1 | Substrate in Example 1 | Substrate in Example 1 | Substrate in Example 1 | Substrate in Example 1 |
| Inorganic coating (B) | Type of inorganic particles | Al₂O₃ | Al₂O₃ | Al₂O₃ | Al₂O₃ | Al₂O₃ | Al₂O₃ | Al₂O₃ | Al₂O₃ |
| | Volume content of inorganic particles (%) | 90 | 92 | 88 | 85 | 83 | 88 | 90 | 90 |
| | Particle size D50 of inorganic particles | 0.5 µm±0.1 µm | 1 µm±0.2 µm | 0.2 µm µm to 0.3 µm | 0.1 µm µm to 0.2 µm | <100 nm | 0.2 µm µm to 0.3 µm | 0.5 µm±0.1 µm | 0.5 µm±0.1 µm |
| | Single-layer thickness (um) | 2 | 2 | 1 | 1 | 1 | 2 | 1.5 | 2 |
| | Layer quantity | 2 | 2 | 2 | 2 | 2 | 2 | 2 | 1 |
| Organic coating (C) | Organic heat-resistant resin | Meta-aramid | Meta-aramid | Meta-aramid | Meta-aramid | Meta-aramid | Meta-aramid | Meta-aramid | Meta-aramid |
| | Volume content of a resin (%) | 90 | 90 | 90 | 90 | 90 | 90 | 90 | 90 |
| | Volume content of inorganic particles (%) | 10 | 10 | 10 | 10 | 10 | 10 | 10 | 10 |
| | Layer quantity | 2 | 2 | 2 | 2 | 2 | 2 | 2 | 2 |
| Separator structure | | CBABC | CBABC | CBABC | CBABC | CBABC | CBABC | CBABC | CABC |
| Pore closing temperature of a separator (°C) | | 137 | 137 | 137 | 137 | 137 | 137 | 137 | 139 |
| Film rupture temperature of a separator (°C) | | 280 | 250 | 290 | 300 | 320 | 320 | 270 | 250 |
| Elongation of a separator (MD/TD, %) | | 50/50 | 50/50 | 50/50 | 50/50 | 50/50 | 50/50 | 50/50 | 50/50 |
| Thermal shrinkage at 150°C for 0.5 h (%) | | 3.0% | 4.0% | 2.8% | 2.5% | 2.0% | 2.5% | 4.0% | 4.5% |

| Separator characteristics | Example 1 | Example 17 | Example 18 | Example 19 | Example 20 | Example 21 | Example 22 | Example 23 | |
|---|---|---|---|---|---|---|---|---|---|
| Pass rate of the foreign object extrusion test for a battery | 95% | 75% | 95% | 98% | 98% | 98% | 85% | 85% | |
| Pass rate of the hot box test for a battery at 140°C | 100% | 70% | 100% | 100% | 100% | 100% | 95% | 90% | |

**Table 2 (continued)**

| Separator characteristics | | Example 24 | Example 25 | Example 26 | Example 27 | Comparative example 5 | Comparative example 6 | Comparative example 7 |
|---|---|---|---|---|---|---|---|---|
| Base film (A) | Polyolefin substrate | Substrate in Example 1 | Substrate in Example 1 | Substrate in Example 1 | Substrate in Example 1 | Substrate in Example 1 | Substrate in Example 1 | Substrate in Example 1 |
| Inorganic coating (B) | Type of inorganic particles | Mg(OH)₂ | BaSO₄ | Boehmite | Boron nitride | / | / | Al₂O₃ |
| | Volume content of inorganic particles (%) | 88 | 88 | 88 | 88 | / | / | 90 |
| | Particle size D50 of inorganic particles | 0.2 µm µm to 0.3 µm | 0.2 µm µm to 0.3 µm | 0.2 µm µm to 0.3 µm | 0.2 µm µm to 0.3 µm | / | / | 0.5 µm±0.1 µm |
| | Single-layer thickness (um) | 1 | 1 | 1 | 1 | / | / | 2 |
| | Layer quantity | 2 | 2 | 2 | 2 | / | / | 2 |
| Organic coating (C) | Organic heat-resistant resin | Meta-aramid | Meta-aramid | Meta-aramid | Meta-aramid | Meta-aramid | Meta-aramid | / |
| | Volume content of a resin (%) | 90 | 90 | 90 | 90 | 40 | 100 | / |
| | Volume content of inorganic particles (%) | 10 | 10 | 10 | 10 | 60 | 0 | / |
| | Layer quantity | 2 | 2 | 2 | 2 | 2 | 2 | / |
| Separator structure | | CBABC | CBABC | CBABC | CBABC | CAC | CAC | BAB |
| Pore closing temperature of a separator (°C) | | 137 | 137 | 137 | 137 | 142 | 144 | 136 |
| Film rupture temperature of a separator (°C) | | 290 | 290 | 290 | 290 | 180 | 200 | 160 |
| Elongation of a separator (MD/TD, %) | | 180/180 | 180/180 | 180/180 | 180/180 | 180/180 | 180/180 | 180/180 |
| Thermal shrinkage at 150°C for 0.5 h (%) | | 2.8% | 2.8% | 2.8% | 2.8% | 10.0% | 15.0% | 3.0% |

| Separator characteristics | Example 24 | Example 25 | Example 26 | Example 27 | example 5 | Comparative example 6 | Comparative example 7 | |
|---|---|---|---|---|---|---|---|---|
| Pass rate of the foreign object extrusion test for a battery | 95% | 95% | 95% | 95% | 50% | 30% | 50% | |
| Pass rate of the hot box test for a battery at 140°C | 100% | 100% | 100% | 100% | 50% | 30% | 50% | |

In Examples 17 to 27 and Comparative examples 5 to 7, thicknesses of the organic coating are 2 µm to 3 µm.

**Table 3**

| Separator characteristics | | Example 1 | Example 28 | Example 29 | Example 30 | Example 31 | Example 32 | Example 33 |
|---|---|---|---|---|---|---|---|---|
| Base film (A) | Polyolefin substrate | Substrate in Example 1 | Substrate in Example 1 | Substrate in Example 1 | Substrate in Example 1 | Substrate in Example 1 | Substrate in Example 1 | Substrate in Example 1 |
| Inorganic coating (B) | Type of inorganic particles | Al₂O₃ | Al₂O₃ | Al₂O₃ | Al₂O₃ | Al₂O₃ | Al₂O₃ | Al₂O₃ |
| | Volume content of inorganic particles (%) | 90 | 90 | 90 | 90 | 90 | 90 | 90 |
| | Layer quantity | 2 | 2 | 2 | 2 | 2 | 2 | 2 |
| Organic coating (C) | Organic heat-resistant resin | Meta-aramid | Meta-aramid | Meta-aramid | Meta-aramid | Para-aramid | Polyimide | Polyether imide |
| | Melting point or decomposi tion temperatur e (°C) | > 200°C | > 200°C | > 200°C | > 200°C | > 300°C | > 300°C | > 300°C |
| | Volume content of a resin (%) | 90 | 72 | 60 | 99 | 90 | 90 | 90 |
| | Volume content of inorganic particles (%) | 10 | 28 | 40 | 1 | 10 | 10 | 10 |
| | Layer quantity | 2 | 2 | 2 | 2 | 2 | 2 | 2 |
| Separator structure | | CBABC | CBABC | CBABC | CBABC | CBABC | CBABC | CBABC |
| Pore closing temperature of a separator (°C) | | 137 | 137 | 137 | 137 | 137 | 137 | 137 |
| Film rupture temperature of a separator (°C) | | 280 | 280 | 280 | 280 | 450 | 400 | 300 |
| Elongation of a separator (MD/TD, %) | | 180/180 | 180/180 | 180/180 | 180/180 | 180/180 | 180/180 | 180/180 |
| Thermal shrinkage at 150°C for 0.5 h (%) | | 3.0% | 3.0 | 2.9 | 3.0% | 3.0% | 0.5% | 0.5% |
| Pass rate of the foreign object extrusion test for a battery | | 95% | 95% | 95% | 95% | 100% | 100% | 100% |

| Separator characteristics | Example 1 | Example 28 | Example 29 | Example 30 | Example 31 | Example 32 | Example 33 | |
|---|---|---|---|---|---|---|---|---|
| Pass rate of the hot box test for a battery at 140°C | 100% | 100% | 100% | 100% | 100% | 100% | 100% | |
| Pass rate of overcharge performance of a battery | 70% | 80% | 90% | 60% | 60% | 60% | 60% | |
| Processing excellent rate of a separator | > 90% | > 90% | > 90% | < 80% | < 70% | < 70% | < 70% | |
| Air permeability value (s/100cc) | 300 | 260 | 200 | 400 | 400 | 400 | 400 | |

**Table 3 (continued)**

| Characteristics of a composite separator | | Example 34 | Example 35 | Example 36 | Comparative example 8 | Comparative example 9 | Comparative example 10 |
|---|---|---|---|---|---|---|---|
| Base film (A) | Polyolefin substrate | Substrate in Example 1 | Substrate in Example 1 | Substrate in Example 1 | Substrate in Example 1 | Substrate in Example 1 | Substrate in Example 1 |
| Inorganic coating (B) | Type of inorganic particles | Al₂O₃ | Al₂O₃ | Al₂O₃ | Al₂O₃ | Al₂O₃ | Al₂O₃ |
| | Volume content of inorganic particles (%) | 90 | 90 | 90 | 90 | 90 | 90 |
| | Layer quantity | 2 | 2 | 2 | 2 | 2 | 2 |
| Organic coating (C) | Organic heat-resistant resin | Meta-aramid | Meta-aramid | Meta-aramid | Paraformalde hyde | Meta-aramid | Meta-aramid |
| | Melting point or decomposition temperature (°C) | > 200°C | > 200°C | > 200°C | < 200°C | > 200°C | > 200°C |
| | Volume content of a resin (%) | 90 | 90 | 90 | 100 | 30 | 100 |
| | Volume content of inorganic particles (%) | 10 | 10 | 10 | 0 | 70 | 0 |
| | Single-layer thickness (um) | 1 | 3 | 3 | 2 | 2 | 0.3 |
| | Layer quantity | 2 | 2 | 1 | 2 | 2 | 2 |
| Separator structure | | CBABC | CBABC | CBAB | CBABC | CBABC | CBABC |
| Pore closing temperature of a separator (°C) | | 136 | 138 | 137 | 137 | 137 | 138 |
| Film rupture temperature of a separator (°C) | | 280 | 300 | 280 | 170 | 190 | 165 |
| Elongation of a separator (MD/TD, %) | | 180/180 | 180/180 | 180/180 | 180/180 | 180/180 | 180/180 |
| Thermal shrinkage at 150°C for 0.5 h (%) | | 3.0% | 3.0% | 3.0% | 5.5% | 4.0% | 3.0% |
| Pass rate of the foreign object extrusion test for a battery | | 95% | 98% | 80% | 50% | 50% | 50% |
| Pass rate of the hot box test for a battery at 1 40°C | | 100% | 100% | 90% | 50% | 60% | 50% |

In Examples 28 to 36 and Comparative examples 8 to 10, particle sizes D50 of the inorganic particles in the inorganic coating fall within a range of 0.5 µm±0.1 µm, and single-layer thicknesses of the inorganic coating are 2 µm to 3 µm.

**Table 4**

| Separator characteristics | | Exampl e 1 | Exampl e 37 | Exampl e 38 | Exampl e 39 | Exampl e 40 | Exampl e 41 | Compar ative example 4 | Compar ative example 11 | Compar ative example 12 |
|---|---|---|---|---|---|---|---|---|---|---|
| Base film (A) | Polyolefin substrate | Substrate in Exampl e 1 | Substrate in Exampl e 1 | Substrate in Exampl e 1 | Substrate in Exampl e 1 | Substrate in Exampl e 1 | Substrate in Exampl e 1 | Substrate in Exampl e 1 | Substrate in Example 1 | Substrate in Example 1 |
| Inorgani c coating (B) | Type of inorganic particles | Al₂O₃ | Al₂O₃ | Al₂O₃ | Al₂O₃ | Al₂O₃ | Al₂O₃ | / | / | Al₂O₃ |
| | Volume content of inorganic particles (%) | 90 | 90 | 90 | 90 | 90 | 90 | / | / | 90 |
| | Layer quantity | 2 | 2 | 1 | 1 | 1 | 2 | / | / | 2 |
| Organic coating (C) | Organic heat-resistant resin | Meta-aramid | Meta-aramid | Meta-aramid | Meta-aramid | Meta-aramid | Meta-aramid | Meta-aramid | Meta-aramid | 1 |
| | Volume content of a resin (%) | 80 | 80 | 80 | 80 | 80 | 80 | 40 | 80 | 1 |
| | Volume content of inorganic particles (%) | 20 | 20 | 20 | 20 | 20 | 20 | 60 | 20 | 1 |
| | Single-layer thickness (um) | 2 | 3 | 2 | 3 | 3 | 2 | 2 | 2 | / |
| | Layer quantity | 2 | 1 | 2 | 1 | 1 | 1 | 2 | 2 | / |
| Separator structure | | CBAB C | BABC | CABC | CAB | ABC | BACB | CAC | CAC | BAB |
| Pore closing temperature of a separator (°C) | | 137 | 137 | 138 | 138 | 137 | 138 | 140 | 141 | 136 |
| Film rupture temperature of a separator (°C) | | 280 | 270 | 290 | 270 | 260 | 260 | 180 | 190 | 165 |
| Elongation of a separator (MD/TD, %) | | 180/180 | 180/180 | 180/180 | 180/180 | 180/180 | 180/180 | 180/180 | 180/180 | 180/180 |
| Thermal shrinkage at 150°C for 0.5 h (%) | | 3.0% | 3.0% | 4.0% | 2.5% | 3.0% | 3.0% | 10.0% | 13% | 3.0% |
| Pass rate of the foreign object extrusion test for a battery | | 95% | 80% | 80% | 75% | 80% | 90% | 50% | 30% | 50% |
| Pass rate of the hot box test for a battery at 140°C | | 100% | 80% | 80% | 75% | 85% | 80% | 40% | 30% | 50% |

In Examples 37 to 41 and Comparative examples 11 and 12, particle sizes D50 of the inorganic particles in the inorganic coating fall within a range of 0.5 µm±0.1 µm, and single-layer thicknesses of the inorganic coating are 2 µm to 3 µm.

**Table 5**

| Separator characteristics | | Exampl e 42 | Exampl e 43 | Exampl e 44 | Exampl e 45 | Exampl e 46 | Exampl e 47 | Compar ative example 13 | Compar ative example 14 | Compar ative example 15 |
|---|---|---|---|---|---|---|---|---|---|---|
| Base film (A) | Polyolefin substrate | Substrat e in Exampl e 1 | Substrat e in Exampl e 1 | Substrat e in Exampl e 1 | Substrat e in Exampl e 1 | Substrat e in Exampl e 1 | Substrat e in Exampl e 1 | Substrat e in Example 1 | Substrat e in Example 1 | Substrat e in Example 1 |
| Inorgani c coating (B) | Type of inorganic particles | Al₂O₃ | Al₂O₃ | Al₂O₃ | Al₂O₃ | Al₂O₃ | Al₂O₃ | / | / | Al₂O₃ |
| | Volume content of inorganic particles (%) | 90 | 90 | 90 | 90 | 90 | 90 | / | / | 90 |
| | Layer quantity | 2 | 2 | 1 | 1 | 1 | 1 | / | / | 2 |
| Organic coating (C) | Organic heat-resistant resin | Meta-aramid | Meta-aramid | Meta-aramid | Meta-aramid | Meta-aramid | Meta-aramid | Meta-aramid | Meta-aramid | / |
| | Volume content of a resin (%) | 80 | 80 | 80 | 80 | 80 | 80 | 40 | 80 | / |
| | Volume content of inorganic particles (%) | 20 | 20 | 20 | 20 | 20 | 20 | 60 | 20 | |
| | Single-layer thickness (um) | 3 | 3 | 2 | 2 | 3 | 3 | 2 | 2 | / |
| | Layer quantity | 1 | 1 | 2 | 2 | 1 | 1 | 2 | 2 | / |
| Adhesiv e layer 1 (D) | Thickness (µm) | 2 to 6 | 2 to 6 | 1.5 | 2 to 6 | 2 to 6 | 2 to 6 | 0.5 | 0.5 | 1.5 |
| | Type of an adhesive resin | PVDF | PMMA | PVDF | PVDF | PVDF | PMMA | PMMA | PMMA | PVDF |
| | | | | | | | | | | |
| | | | | | | | | | | |
| | Solvent | Water | Water | Water | Water | Water | Water | Water | Water | NMP |
| Adhesiv e layer 2 (E) | Thickness (um) | / | / | 2 to 6 | / | / | / | 0.5 | 0.5 | 1.5 |
| | Type of an adhesive resin | / | / | PVDF | / | / | / | PMMA | PMMA | PVDF |
| | | | | | | | | | | |
| | | | | | | | | | | |
| | Solvent | / | / | Water | / | / | / | Water | Water | NMP |
| Separator structure | | CBAB D | CBAB D | DCAB D | DCAB C | CABD | CABD | DCACD | DCACD | DBABD |
| Pore closing temperature of a separator (°C) | | 137 | 137 | 138 | 138 | 138 | 138 | 140 | 141 | 136 |
| Film rupture temperature of a separator (°C) | | 270 | 270 | 270 | 270 | 260 | 260 | 180 | 200 | 165 |
| Elongation of a separator (MD/TD, %) | | 180/180 | 180/180 | 180/180 | 180/180 | 180/180 | 180/180 | 180/180 | 180/180 | 180/180 |

| Separator characteristics | Exampl e 42 | Exampl e 43 | Exampl e 44 | Exampl e 45 | Exampl e 46 | Exampl e 47 | Compar ative example 13 | Compar ative example 14 | Compar ative example 15 | |
|---|---|---|---|---|---|---|---|---|---|---|
| Thermal shrinkage at 150°C for 0.5 h (%) | 3.0% | 3.0% | 4.0% | 4.0% | 4.0% | 4.0% | 10.0% | 13% | 3.0% | |
| Pass rate of the foreign object extrusion test for a battery | 95% | 95% | 100% | 90% | 80% | 80% | 65% | 35% | 50% | |
| Pass rate of the hot box test for a battery at 140°C | 100% | 95% | 95% | 95% | 85% | 85% | 60% | 30% | 40% | |

In Examples 42 to 47 and Comparative examples 13 to 15, particle sizes D50 of the inorganic particles in the inorganic coating fall within a range of 0.5 µm±0.1 µm, and single-layer thicknesses of the inorganic coating are 2 µm to 3 µm.

Table 1 lists impact of different polyolefin porous film designs in separators on the separators and lithium-ion batteries. It can be seen from the data in Table 1 that the separator structure in this application has good safety effect. When polyolefin porous films with different characteristics are used as base films, the separator has different safety effect, but the safety effect is better than that of a proportional separator structure. The polyolefin porous film is preferably a substrate having at least one of the following characteristics: a low-temperature pore closing characteristic, a high film rupture characteristic, and a high elongation characteristic, and most preferably a substrate having three characteristics.

In addition, it can be seen from comparison between Example 1 and Comparative example 1 that compared with the separator with the CAC structure in Comparative example 1, for the CBABC structure used in Example 1, when inorganic coatings are provided on both surfaces of the base film, because the inorganic coatings do not have significant impact on the pore closing temperature of the base film, the pore closing temperature of the separator in Example 1 increases only by 1°C from the pore closing temperature of 136°C of the base film, and good pore closing effect of the base film is still maintained. The organic-inorganic composite coating is used for Comparative example 1, which has some impact on the pore closing effect of the base film. The pore closing effect is obviously reduced when a temperature increases from 136°C to 140°C.

In addition, the inorganic coating enables the thermal shrinkage rate of the separator in Example 1 to be maintained at a level of 3.0%, and the thermal shrinkage rate of the organic-inorganic composite coating in Comparative example 1 is slightly large, reaching 10%, and the thermal shrinkage rate significantly affects both thermal abuse and mechanical abuse.

The organic coating in Example 1 has a higher content of the organic heat-resistant resin, and the formed organic coating has higher strength at a high temperature. The strength supports maintenance of the pore closing effect of the polyolefin porous film and the inorganic coating at a higher temperature, and no failure is caused by film rupture. The film rupture temperature of the separator in Example 1 is up to 280°C. In Comparative example 1, strength of an organic phase in the organic-inorganic composite coating is greatly damaged by inorganic particles, which results in a significant decrease in the strength of the separator at a high temperature. The film rupture temperature of the separator can only reach 200°C.

Therefore, the separator according to Example 1 has a relatively low pore closing temperature, and can respond to early thermal abuse in a timely manner. In addition, the separator has dimensional stability, a high film rupture temperature, and a good pore closing maintenance state under a higher temperature condition, to isolate positive and negative electrodes of a lithium-ion battery in an all-round manner, reduce occurrence of a short circuit, and ensure safety of the battery. Therefore, the pass rate of the 100% SOC foreign object extrusion test of the battery in Example 1 is 95%, the pass rate of the hot box at 150°C is 100%, and the pass rate in Comparative example 1 is 60%. Example 1 has better safety effect.

Table 2 lists impact of different inorganic coating designs in separators on lithium-ion batteries. The separator in this application has good safety effect. When the different inorganic coating designs are used, the separator has different safety effect, but the safety effect is better than that of the separator structures in the comparative examples. Inorganic coatings are preferably coated on both surfaces of the base film. When the inorganic particles are smaller and the inorganic coating is thicker, the safety effect is better. In practice, the inorganic coating can be designed according to requirements of energy density and acceptable safety performance of a battery.

Table 3 lists impact of different organic coating designs in separators on lithium-ion batteries. The organic coating in the scope of this application is an organic coating of an organic heat-resistant resin with a melting point or a decomposition temperature greater than 200°C. The content of the organic heat-resistant resin is in a range of 60% to 99%, and the single-layer thickness is 0.5 µm µm to 5 µm. The organic coating can exhibit better high-temperature film rupture effect, better processing performance, and better air permeability.

Table 4 lists impact of different structural designs in separators on lithium-ion batteries. The separators with different structures have different safety effect, but are all better than those in the comparative examples. In practice, the structure of the separator can be designed according to requirements of energy density and acceptable safety performance of a battery. The structure of the separator in this application is not limited to the structure in the foregoing embodiments, and the structure that meets the requirements of this application has good safety effect.

Table 5 lists impact of the adhesive layer used in combination in separators on lithium-ion batteries. The adhesive layer can improve interface bonding of an electrochemical cell and battery hardness, and has specific effect of improving mechanical performance. However, the interface bonding and the battery hardness may also be achieved by using a preparation process of the battery. After the adhesive layer is used for the separator in this application, the safety effect is also better than the effect of using the adhesive layer in the comparative examples.

In summary, the separator in this application is a combination of a base film, an inorganic coating, and an organic coating, and different layers collaborate to provide a good pore closing function and excellent heat-resistance performance. In addition, a temperature difference between a pore closing temperature and a film rupture temperature may reach 130°C, or even 140°C. Therefore, the separator in the embodiments of this application is a safe separator with a wide temperature range at a high temperature.

Specific values such as a pore closing temperature, a film rupture temperature, an ambient temperature during measurement, an elongation, a shrinkage rate, a film layer thickness, a particle size, and the like in this application may have some errors, for example, may have errors of 1%, due to impact of precision of a measurement device. When the parameters in this application fluctuate within the foregoing error ranges, it should also be understood that the parameters fall within the scope of protection of this application.

The descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A separator, comprising a base film, at least one inorganic coating, and at least one organic coating, wherein the base film, the inorganic coating, and the organic coating are laminated, a surface on at least one side of the base film is in contact with the inorganic coating, a volume content of an organic heat-resistant resin in the organic coating is 60% to 99%, a volume fraction of inorganic particles contained in the organic coating is 1% to 40%, and a melting point or decomposition temperature of the organic heat-resistant resin is greater than or equal to 200°C.

2. The separator according to claim 1, wherein a film rupture temperature of the separator is greater than or equal to 220°C, and a thermal shrinkage rate at 150°C for 0.5 h is less than or equal to 5%.

3. The separator according to claim 1, wherein a film rupture temperature of the separator is greater than or equal to 260°C, and a thermal shrinkage rate at 150°C for 0.5 h is less than or equal to 3%.

4. The separator according to any one of claims 1 to 3, wherein a pore closing temperature of the separator is less than or equal to 140°C, the film rupture temperature is greater than or equal to 220°C, an elongation of the separator is greater than or equal to 130%, and the thermal shrinkage rate at 150°C for 0.5 h is less than or equal to 5%.

5. The separator according to any one of claims 1 to 4, wherein each inorganic coating contains inorganic particles, and a volume content of the inorganic particles in the inorganic coating is greater than 80%.

6. The separator according to claim 5, wherein in any inorganic coating, the volume content of the inorganic particles is 85% to 99%.

7. The separator according to claim 5 or 6, wherein a particle size D50 of the inorganic particles is less than or equal to 2 µm.

8. The separator according to any one of claims 1 to 7, wherein a thickness of each inorganic coating is less than or equal to 4 µm.

9. The separator according to claim 8, wherein in the organic coating, the organic heat-resistant resin is selected from at least one of aromatic polyamide, polyimide, polyamide-imide, polyetherimide, polysulfone, polyketone, polyether ketone, or polytetrafluoroethylene.

10. The separator according to claim 9, wherein the aromatic polyamide is selected from poly-p-phenylene terephthamide and/or poly(m-phenylene isophthalamide).

11. The separator according to any one of claims 1 to 10, wherein a thickness of each organic coating is 0.5 µm to 5 µm.

12. The separator according to claim 11, wherein the thickness of each organic coating is 1 µm to 4 µm.

13. The separator according to any one of claims 1 to 12, wherein the at least one inorganic coating and the at least one organic coating are respectively disposed on surfaces on the two sides of the base film, and the surfaces on the two sides of the base film are both in contact with the inorganic coating.

14. The separator according to any one of claims 1 to 13, wherein the elongation of the base film is greater than or equal to 130%, the pore closing temperature is less than or equal to 145°C, and the film rupture temperature is greater than or equal to 155°C.

15. The separator according to claim 14, wherein the elongation of the base film is greater than or equal to 150%, the pore closing temperature is less than or equal to 140°C, and the film rupture temperature is greater than or equal to 160°C.

16. The separator according to any one of claims 1 to 15, wherein a weight per unit thickness of the base film is greater than or equal to 0.62 g/m²/µm, a porosity is less than 35%, and an average pore size is less than 45 nm.

17. The separator according to claim 16, wherein the weight per unit thickness of the base film is greater than or equal to 0.64 g/m²/µm, the porosity is greater than 25% and less than 35%, and the average pore size is less than 43 nm.

18. The separator according to any one of claims 1 to 17, wherein the base film is a polyolefin porous film.

19. The separator according to claim 18, wherein the base film comprises a first polyolefin resin, the first polyolefin resin is ultra-high molecular weight polyethylene with a weight average molecular weight greater than or equal to 600,000, and a mass content of the first polyolefin resin in the base film is greater than 50%.

20. The separator according to claim 19, wherein the base film further comprises a second polyolefin resin and/or a third polyolefin resin, a melting point of the second polyolefin resin is less than a melting point of the first polyolefin resin, and a melting point of the third polyolefin resin is greater than the melting point of the first polyolefin resin.

21. The separator according to claim 20, wherein the base film contains the third polyolefin resin, and a mass content of the third polyolefin resin in the base film is 5% to 30%.

22. The separator according to claim 21, wherein the third polyolefin resin is selected from at least one of polypropylene, poly-1-butylene, poly-1-pentene, poly-1-hexene, poly-4-methyl-1-pentene, poly-1-octene, polyvinyl acetate, polymethyl methacrylate, polystyrene, polydifluoroethylene, or polytetrafluoroethylene.

23. The separator according to any one of claims 1 to 22, wherein a thickness of the base film is 1 µm to 16 µm.

24. The separator according to any one of claims 1 to 23, wherein an adhesive layer is provided on at least one outermost surface of the separator.

25. A preparation method of the separator according to any one of claims 1 to 24, comprising:
forming the inorganic coating on a surface on at least one side of the base film; and
forming the organic coating on a surface on the other side of the base film and/or a surface of at least one inorganic coating.

26. The preparation method according to claim 25, wherein the preparation method further comprises:
melting and mixing raw materials of the base film, and forming a gel-like sheet after extrusion molding, wherein the gel-like sheet sequentially undergoes primary stretching, extraction, secondary stretching, and heat setting, to form the base film.

27. The preparation method according to claim 26, wherein the primary stretching comprises transverse direction stretching and machine direction stretching, and stretching ratios of the transverse direction stretching and the machine direction stretching are 3 to 6.

28. The preparation method according to claim 26 or 27, wherein a temperature of the secondary stretching is 105°C to 130°C.

29. The preparation method according to any one of claims 25 to 28, wherein the forming the inorganic coating on a surface on at least one side of the base film comprises:
forming an inorganic slurry containing inorganic particles, coating the inorganic slurry on the surface on the at least one side of the base film, and forming the inorganic coating after drying.

30. The preparation method according to any one of claims 25 to 29, wherein the forming the organic coating on a surface on the other side of the base film and/or a surface of at least one inorganic coating comprises:
forming an organic slurry containing an organic heat-resistant resin, coating the organic slurry on the surface on the other side of the base film and/or the surface of the at least one inorganic coating, and forming the organic coating after drying.

31. A secondary battery, comprising a positive electrode plate, a negative electrode plate, an electrolyte, and the separator according to any one of claims 1 to 24 or the separator obtained by using the preparation method according to any one of claims 25 to 30, wherein the separator is located between the positive electrode plate and the negative electrode plate, and the electrolyte is filled between the positive electrode plate and the negative electrode plate and infiltrates the separator.

32. A power-consuming device, comprising the secondary battery according to claim 31.
